(19) Europäisches Patentamt
European Patent Office
Office européen des brevets

(11) Veröffentlichungsnummer : **0 415 066 B1**

(12) **EUROPÄISCHE PATENTSCHRIFT**

(45) Veröffentlichungstag der Patentschrift :
**11.11.92 Patentblatt 92/46**

(21) Anmeldenummer : **90114016.0**

(22) Anmeldetag : **21.07.90**

(51) Int. Cl.[5] : **C08L 69/00,** C08L 75/06, C08L 51/04, C08G 64/06, // (C08L69/00, 75:06, 51:04)

# (54) Ternäre, thermoplastische Mischungen.

(30) Priorität : **03.08.89 DE 3925635**

(43) Veröffentlichungstag der Anmeldung :
**06.03.91 Patentblatt 91/10**

(45) Bekanntmachung des Hinweises auf die Patenterteilung :
**11.11.92 Patentblatt 92/46**

(84) Benannte Vertragsstaaten :
**DE FR GB IT**

(56) Entgegenhaltungen :
**EP-A- 0 104 695**
**EP-A- 0 207 327**
**EP-A- 0 265 790**
**EP-A- 0 337 206**
**EP-A- 0 359 953**
**EP-A- 0 362 646**
**US-A- 4 368 315**

(73) Patentinhaber : **BAYER AG**
**W-5090 Leverkusen 1 Bayerwerk (DE)**

(72) Erfinder : **Tacke, Peter, Dr.**
**Brandenburger Strasse 12**
**W-4150 Krefeld (DE)**
Erfinder : **Nouvertné, Werner, Dr.**
**Burgstrasse 17B**
**W-4150 Krefeld 11 (DE)**
Erfinder : **Gielen, Franz-Josef, D. I.**
**Niersweg 29**
**W-4150 Krefeld (DE)**
Erfinder : **Freitag, Dieter, Dr.**
**Hasenheide 10**
**W-4150 Krefeld (DE)**
Erfinder : **Grigo, Ulrich, Dr.**
**Michelsheide 9**
**W-4152 Kempen 3 (DE)**
Erfinder : **Westeppe, Uwe, Dr.**
**Vogelskamp 72**
**W-4020 Mettmann (DE)**

**EP 0 415 066 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Gegenstand der nicht vorveröffentlichten deutschen Patentanmeldung P 3 833 953.6 sind Mischungen von a) speziellen, neuen Polycarbonaten mit b) Elastomeren oder mit anderen Thermoplasten als den speziellen neuen Polycarbonaten der Komponente a) und gegebenenfalls c) üblichen Additiven, sowie Verfahren zur Herstellung dieser Mischungen.

Einzelheiten sind dem anschließend gekürzt aufgeführten Wortlaut dieser deutschen Patentanmeldung P 3 833 953.6 auf den Seiten 2 bis 52 der vorliegenden Patentanmeldung zu entnehmen:

Gegenstand der Erfindung der deutschen Patentanmeldung P 3 833 953.6 sind Mischungen, enthaltend

a) thermoplastische Polycarbonate auf Basis von Diphenolen der Formel (I)

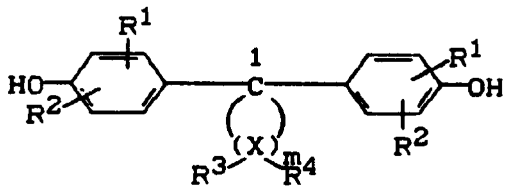

(I),

worin

$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,

m eine ganze Zahl von 4 bis 7,

$R^3$ und $R^4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X, $R^3$ und $R^4$ gleichzeitig Alkyl ist,

und

b) Elastomere oder andere Thermoplasten als die der Komponente a) und gegebenenfalls

c) übliche Additive,

sowie Verfahren zu ihrer Herstellung.

In der nicht vorveröffentlichten deutschen Patentanmeldung P 3 832 396.6 sind die Polycarbonate (a) der erfindungsgemäßen Mischungen sowie ihre Ausgangsprodukte und ihre Herstellung beschrieben.

Ausgangsprodukte für die Polycarbonate (a) sind Dihydroxydiphenylcycloalkane der Formel (I)

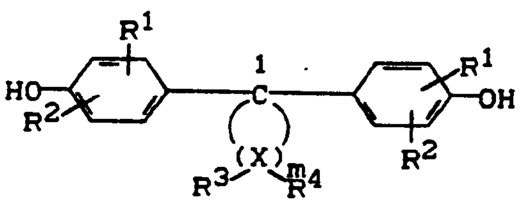

(I),

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$, für jedes X individuell wählbar, unabhängig voneinander Wasserstoff oder $C_1$-$C_6$-Alkyl

und

X Kohlenstoff bedeuten,

mit der Maßgabe, daß an mindestens einem Atom X $R^3$ und $R^4$ gleichzeitig Alkyl bedeuten.

Bevorzugt sind an 1 - 2 Atomen X, insbesondere nur an einem Atom X, $R^3$ und $R^4$ gleichzeitig Alkyl. Bevorzugter Alkylrest ist Methyl; die X-Atome in $\alpha$-Stellung zu dem di-phenyl-substituierten C-Atom (C-1) sind bevorzugt nicht dialkylsubstituiert, dagegen ist die Alkyldisubstitution in $\beta$-Stellung zu C-1 bevorzugt.

Bevorzugt sind Dihydroxydiphenylcycloalkane mit 5 und 6 Ring-C-Atomen im cycloaliphatischen Rest (m

= 4 oder 5 in Formel (I)), beispielsweise die Diphenole der Formeln

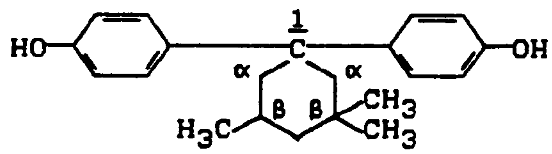

(II)

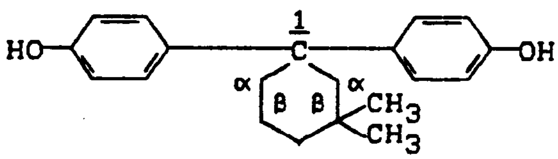

(III) und

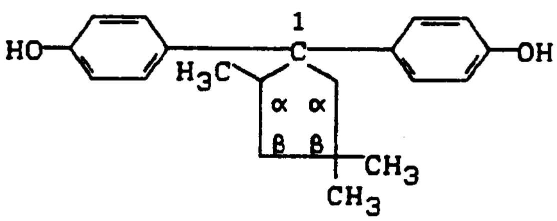

(IV),

wobei das 1,1-Bis-(4-hydroxyphenyl)-3.3.5-trimethyl cyclohexan (Formel II) besonders bevorzugt ist.

Die Dihydroxydiphenylcycloalkane der Formel (I) können in an sich bekannter Weise durch Kondensation von Phenolen der Formel (V)

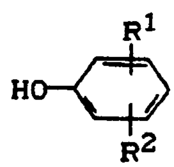

(V)

und Ketonen der Formel (VI)

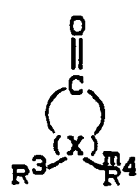

(VI)

hergestellt werden, wobei in den Formeln (V) und (VI) X, $R^1$, $R^2$, $R^3$, $R^4$ und m die für Formel (I) angegebene Bedeutung haben.

Die Phenole der Formel (V) sind entweder literaturbekannt oder nach literaturbekannten Verfahren erhältlich (siehe beispielsweise für Kresole und Xylenole, Ullmanns Encyklopädie der technischen Chemie 4. neubearbeitete und erweiterte Auflage Band 15, Seiten 61 - 77, Verlag Chemie-Weinheim-New York 1978; für Chlorphenole, Ullmanns Encyklopädie der technischen Chemie, 4. Auflage, Verlag Chemie, 1975, Band 9, Seiten 573-582; und für Alkylphenole Ullmanns Encyklopädie der technischen Chemie, 4. Auflage, Verlag Chemie

1979, Band 18, Seiten 191-214).

Beispiele für geeignete Phenole der Formel (V) sind: Phenol, o-Kresol, m-Kresol, 2,6-Dimethylphenol, 2-Chlorphenol, 3-Chlorphenol, 2,6-Dichlorphenol, 2-Cyclohexylphenol, Phenylphenole und o-Benzylphenol.

Die Ketone der Formel (VI) sind literaturbekannt (siehe beispielsweise) Beilsteins Handbuch der Organischen Chemie, 7. Band, 4. Auflage, Springer-Verlag, Berlin, 1925 und die entsprechenden Ergänzungsbände 1 bis 4, und J. Am. Chem. Soc. Vol 79 (1957), Seiten 1488-1492, US-PS 2 692 289, Allen et al., J. Chem. Soc., (1959), 2186-2192 und J. Org. Chem. Vol 38, (1973), Seiten 4431-4435, J. Am. Chem. Soc. 87, (1965), Seite 1353-1364. Ein allgemeines Verfahren zur Herstellung von Ketonen der Formel (VI) ist beispielsweise in "Organikum, 15. Auflage, 1977, VEB-Deutscher Verlag der Wissenschaften, Berlin, beispielsweise Seite 698. beschrieben.

Beispiele für bekannte Ketone der Formel (VI) sind:

3,3-Dimethylcyclopentanon, 3,3-Dimethylcyclohexanon, 4,4-Dimethylcyclohexanon, 3-Ethyl-3-Methylcyclopentanon, 2,3,3-Trimethylcyclopentanon, 3,3,4-Trimethylcyclopentanon, 3,3-Dimethylcycloheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 3,3,5-Trimethylcyclohexanon, 3,4,4-Trimethylcyclohexanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 3-Ethyl-4-isopropyl-3-methyl-cyclopentanon, 4-sec. Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.Butyl-4,4-dimethylcyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon, 2,2-Dimethylcyclooctanon, und 3,3,8-Trimethyl-cyclooctanon.

Beispiele für bevorzugte Ketone sind

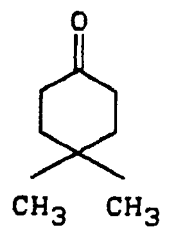

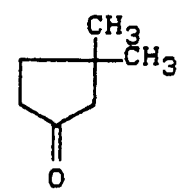

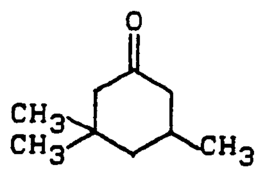

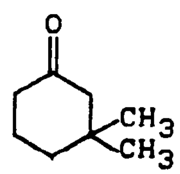

und

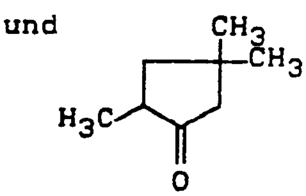

Zur Bisphenolherstellung werden im allgemeinen 2 bis 10 Mol, vorzugsweise 2,5 bis 6 Mol Phenol (V) pro Mol Keton (VI), verwendet. Bevorzugte Reaktionszeiten betragen 1 bis 100 Stunden. Im allgemeinen arbeitet man bei Temperaturen von -30°C bis 300°C, Vorzugsweise von -15°C bis 150°C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiterhin kann die Umsetzung durch Zugabe von Co-Katalysatoren wie $C_1$-$C_{18}$-Alkyl-Mercaptanen, Schwefelwasserstoff, Thiophenolen, Thiosäuren und Dialkylsulfiden, bevorzugt in Mengen von 0,01 - 0,4 Mol/Mol Keton, insbesondere bevorzugt 0,05 - 0,2 Mol/Mol Keton beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzusetzen, letzteres ist jedoch zur Erzielung guter Umsätze in jedem Fall dann vorteilhaft, wenn der eingesetzte Katalysator das Reaktionswasser nicht bindet.

Geeignete wasserentziehende Mittel sind beispielsweise Acetanhydrid, Zeolithe, Polyphosphorsäure und Phosphorpentoxid.

Man kann Phenol (V) und Keton (VI) im Molverhältnis (V) : (VI) zwischen 2:1 und 10:1, vorzugsweise zwischen 2,5 : 1 und 6 : 1 bei Temperaturen zwischen -30°C und 300°C, vorzugsweise zwischen -15°C und 150°C und bei Drücken von 1 bis 20 bar, vorzugsweise von 1 bis 10 bar in Anwesenheit saurer Katalysatoren und gegebenenfalls in Anwesenheit von Co-Katalysatoen und/oder Lösungsmitteln und/oder wasserentziehenden Mitteln umsetzen.

Bevorzugt sind in Formel (I) an 1 - 2 Atomen X, insbesondere nur an einem Atom X, $R^3$ und $R^4$ gleichzeitig Alkyl. Bevorzugter Alkylrest ist Methyl; ebenfalls verwendbar sind Ethyl oder $C_3$-$C_6$-Alkylreste, die geradkettig oder verzweigt sein können. Die X-Atome in $\alpha$-Stellung zu dem di-phenylsubstituierten C-Atom (C-1) sind bevorzugt nicht dialkylsubstituiert, dagegen ist die Disubstitution mit Alkyl in $\beta$-Stellung in C-1 bevorzugt.

In manchen Fällen verläuft die Reaktion nicht ganz einheitlich, d.h. es können mehrere, unterschiedliche Produkte entstehen, so daß die gewünschte Verbindung zunächst aus einem Gemisch isoliert werden muß. Für Einzelheiten der Kondensation sei auf Schnell, Chemistry und Physics of Polycarbonates, Interscience Publishers, New York 1964 verwiesen. Manchmal kann die Reaktion durch Wahl entsprechender Katalysatoren und Reaktionsbedingungen so gesteuert werden, daß die gewünschte Verbindung ausfällt oder auskristallisiert, was deren Isolierung erleichtert. Die folgenden Vorschriften veranschaulicht die Herstellung des Diphenols der Formel (II).

## Beispiel A

In einem 1 l-Rundkolben mit Rührer, Tropftrichter, Thermometer, Rückflußkühler und Gaseinleitungsrohr werden 7,5 Mol (705 g) Phenol und 0,15 Mol (30,3 g) Dodecylthiol vorgelegt und bei 28 bis 30°C mit trockenem HCl-Gas gesättigt. Zu dieser Lösung werden innerhalb von 3 Stunden eine Lösung von 1,5 Mol (210 g) Dihydroisophoron (3,3,5-Trimethyl-cyclohexan-1-on) und 1,5 Mol (151 g) Phenol zugetropft, wobei weiterhin HCl-Gas durch die Reaktionslösung zugeleitet wird. Nach beendeter Zugabe leitet man für weitere 5 Stunden HCl-Gas ein. Man läßt 8 Stunden bei Zimmertemperatur nachreagieren. Anschließend wird das überschüssige Phenol durch Wasserdampfdestillation entfernt. Der verbleibende Rückstand wird zweimal mit Petrolether (60-90) und einmal mit Methylenchlorid heiß extrahiert und abfiltriert.

Ausbeute: 370 g
Schmelzpunkt: 205 bis 207°C

Die Polycarbonate (a) können gemäß der deutschen Patentanmeldung P 3 832 396.6 aus Diphenolen der Formel (I) hergestellt werden.

Es können sowohl ein Diphenol der Formel (I) unter Bildung von Homopolycarbonaten als auch mehrere Diphenole der Formel (I) unter Bildung von Copolycarbonaten verwendet werden.

Außerdem können die Diphenole der Formel (I) auch im Gemisch mit anderen Diphenolen, beispielsweise mit denen der Formel HO-Z-OH (VII), zur Herstellung von hochmolekularen, thermoplastischen, aromatischen Polycarbonaten verwendet werden.

Geeignete andere Diphenole der Formel HO-Z-OH (VII) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (I) oder Heteroatome als Brückenglieder enthalten kann.

Beispiele für Diphenole der Formel (VII) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis(hydroxyphenyl)-diisopropylbenzole
sowie deren kernalkylierte und kernhalogenierte Verbindungen.

Diese und weitere geeignete andere Diphenole sind z.B. in den US-PS 3 028 365, 2 999 835, 3 148 172,

3 275 601, 2 991 273, 3 271 367, 3 062 781, 2 970 131 und 2 999 846, in den deutschen Offenlegungsschriften 1 570 703, 2 063 050, 2 063 052, 2 211 0956, der französischen Patentschrift 1 561 518 und in der Monographie "H. Schnell, Chemistry and Physics of Polycarbonates, Interscience Publishers, New York 1964", beschrieben.

Bevorzugte andere Diphenole sind beispielsweise:
4,4′-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α′-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α′-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)propan.

Besonders bevorzugte Diphenole der Formel (VII) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Das molare Verhältnis von Diphenolen der Formel (I) zu den gegebenenfalls mitzuverwendenden anderen Diphenolen, beispielsweise denen der Formel (VII), soll zwischen 100 Mol-% (I) zu 0 Mol-% anderem Diphenol und 2 Mol-% (I) zu 98 Mol-% anderem Diphenol, vorzugsweise zwischen 100 Mol% (I) zu 0 Mol% anderem Diphenol und 5 Mol% (I) zu 95 Mol% anderem Diphenol und insbesondere zwischen 100 Mol% (I) zu 0 Mol% anderem Diphenol und 10 Mol% (I) zu 90 Mol% anderem Diphenol und ganz besonders zwischen 100 Mol% (I) zu 0 Mol% anderem Diphenol und 20 Mol% (I) zu 80 Mol% anderem Diphenol.

Die hochmolekularen Polycarbonate aus den Diphenolen der Formel (I), gegebenenfalls in Kombination mit anderen Diphenolen können nach den bekannten Polycarbonatherstellungsverfahren hergestellt werden. Dabei können die verschiedenen Diphenole sowohl statistisch als auch blockweise miteinander verknüpft sein.

Die Polycarbonate können in an sich bekannter Weise verzweigt sein. Wenn Verzweigung gewünscht wird, kann sie in bekannter Weise durch Einkondensieren geringer Mengen, vorzugsweise Mengen zwischen 0,05 und 2,0 Mol% (bezogen auf eingesetzte Diphenole), an drei-oder mehr als drei-funktionellen Verbindungen, insbesondere solchen mit drei oder mehr als drei phenolischen Hydroxylgruppen erreicht werden. Einige Verzweiger mit drei oder mehr als drei phenolischen Hydroxylgruppen sind
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol
2,6-Bis-(2-hydroxy-5′-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan
und
1,4-Bis-((4′-,4″-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate (a) dienen monofunktionelle Verbindungen in üblichen Konzentrationen. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (VIII) geeignet

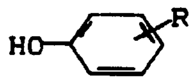

(VIII)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 is 8 Mol-%, bezogen auf eingesetzte Diphenole, eingesetzt.

Die Polycarbonate (a) können vorzugsweise nach dem Phasengrenzflächenverfahren (vgl. H. Schnell, "Chemistry and Physics of Polycarbonates", Polymer Reviews, Vol. IX, Seite 33 ff., Interscience Publ., 1964) in an sich bekannter Weise hergestellt werdend. Hierbei werden die Diphenole der Formel (I) in wäßrig alkalischer Phase gelöst. Zur Herstellung von Co-Polycarbonaten mit anderen Diphenolen werden Gemische von Diphenolen der Formel (I) und den anderen Diphenolen, beispielsweise denen der Formel (VII) eingesetzt. Zur Regulierung des Molekulargewichtes können Kettenabbrecher z.B. der Formel (VIII) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2 Mol-%) können entweder mit den Diphenolen in der wäßrig alkalischen Phase vorgelegt werden oder in dem organischen Lösungsmittel gelöst vor der Phosgenierung zugegeben werden.

Neben den Diphenolen der Formel (I) und gegebenenfalls anderen Diphenolen (VII) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (I) und gegebenenfalls Formel (VII); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate (a) nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen eingesetzt werden. Die Katalysatoren können vor Beginn der Phosgenierung oder während oder auch nach der Phosgenierung zugesetzt werden.

Die Polycarbonate (a) können auch nach dem bekannten Verfahren in homogener Phase, dem sogenannten "Pyridinverfahren" sowie nach dem bekannten Schmelz-Umesterungsverfahren unter Verwendung von beispielsweise Diphenylcarbonat anstelle von Phosgen hergestellt werden.

Die Polycarbonate (a) haben bevorzugt Molekulargewichte $\overline{M}w$ (Gewichtsmittel, ermittelt durch Gelchromatographie nach vorheriger Eichung) von mindestens 10 000, besonders bevorzugt von 10 000 bis 300 000 und für Anwendungen in Spritzgußbereich insbesondere von 20 000 bis 80 000. Sie können linear oder verzweigt sein, sie sind Homopolycarbonate oder Copolycarbonate auf Basis der Diphenole der Formel (I).

Polycarbonate (a) sind somit hochmolekulare, thermoplastische, aromatische Polycarbonate mit $\overline{M}w$ (Gewichtsmittelmolekulargewichten) von mindestens 10 000, vorzusweise von 10 000 bis 200 000 und insbesondere von 20 000 bis 80 000, die bifunktionelle Carbonatstruktureinheiten der Formel (Ia)

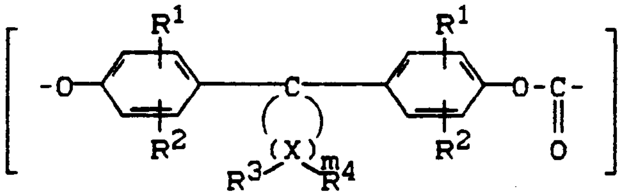

(Ia)

worin

X, $R^1$, $R^2$, $R^3$, $R^4$ und m die für die Formel (I) genannte Bedeutung haben,

in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders 100 Mol-% bis 20 Mol-%, bezogen jeweils auf die Gesamtmenge von 100 Mol-% an difunktionellen Carbonatstruktureinheiten im Polycarbonat enthalten.

Die Polycarbonate enthalten somit jeweils zu 100 Mol-% komplementäre Mengen an anderen difunktionellen Carbonatstuktureinheiten, beispielsweise solchen der Formel (VIIa)

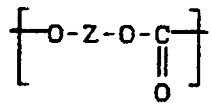

(VIIa),

also in Mengen von 0 Mol-% (einschließlich) bis 98 Mol-% einschließlich, vorzugsweise von 0 Mol-% bis 95 Mol-% und insbesondere von 0 Mol-% bis 90 Mol-% und ganz besonders bevorzugt 0 Mol-% bis 80 Mol-%, bezogen jeweils auf die Gesamtmenge von 100 Mol-% an difunktionellen Carbonatstruktureinheiten im Polycarbonat. [-Z- in Formel (VIIa) entspricht dem -Z- in Formel (VII)].

Durch den Einbau der Diphenole der Formel (I) sind Polycarbonate mit hoher Wärmeformbeständigkeit entstanden, die auch sonst ein gutes Eigenschaftsbild haben. Dies gilt insbesondere für die Polycarbonate auf Basis der Diphenole (I), in denen m 4 oder 5 ist, und ganz besonders für die Polycarbonate auf Basis der Diphenole (Ib)

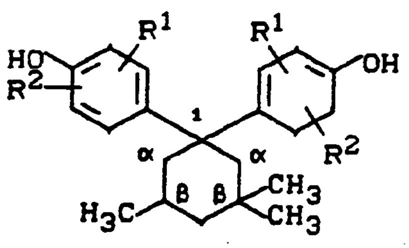

(Ib),

worin

$R^1$ und $R^2$ unabhängig voneinander die für Formel (I) genannte Bedeutung haben und besonders bevorzugt Wasserstoff sind.

Die bevorzugten Polycarbonate (a) sind solche, in denen in den Struktureinheiten der Formel (Ia) m = 4 oder 5 ist und ganz besonders solche aus Einheiten der Formel (Ic)

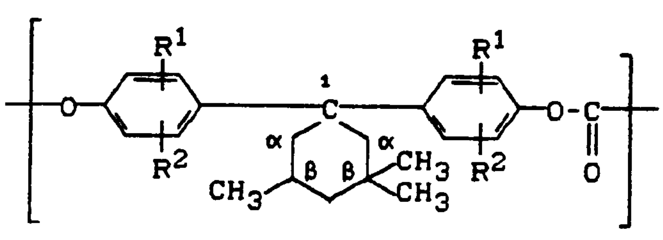

(Ic)

worin

$R^1$ und $R^2$ die für Formel (Ia) genannte Bedeutung haben, besonders bevorzugt aber Wasserstoff sind.

Diese Polycarbonate auf Basis der Diphenole der Formel (Ib), worin insbesondere $R^1$ und $R^2$ Wasserstoff sind, besitzen zur hohen Wärmeformbeständigkeit außerdem eine gute UV-Stabilität und ein gutes Fließverhalten in der Schmelze, was nicht zu erwarten war.

Durch die beliebige Kombination mit anderen Diphenolen, insbesondere mit denen der Formel (VII) lassen sich zudem die Polycarbonateigenschaften in günstiger Weise variieren.

In den folgenden Beispielen B.1 bis B.5 wird die Herstellung von Polycarbonaten (a) erläutert. Die relative Viskosität ist gemessen an 0,5 gew.-%igen Lösungen der Polycarbonate in $CH_2Cl_2$.

Die Einfriertemperatur oder Glastemperatur wird gemessen durch Differential Scanning Calorimetry (DSC).

Beispiel B.1

31,0 g (0,1 Mol) des Diphenols der Formel (II), 33,6 g (0,6 Mol) KOH und 560 g Wasser werden in einer Inertgas-Atmosphäre unter Rühren gelöst. Dann fügt man eine Lösung von 0,188 g Phenol in 560 ml Methylenchlorid zu. In die gut gerührte Lösung wurden bei pH 13 bis 14 und 21 bis 25°C 19,8 g (0,2 Mol) Phosgen eingeleitet. Danach wird 0,1 ml Ethylpyridin zugegeben und noch 45 Minuten gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,259.

Die Glastemperatur des Polymers wurde zu 233°C bestimmt (DSC).

Beispiel B.2

68,4 g (0,3 Mol) Bisphenol A (2,2-Bis-(4-hydroxyphenyl)propan, 217,0 g (0,7 Mol) Diphenol der Formel (II), 336,6 g (6 Mol) KOH und 2700 g Wasser werden in einer Inertgas-Atmosphäre unter Rühren gelöst. Dann fügt man eine Lösung von 1,88 g Phenol in 2500 ml Methylenchlorid zu. In die gut gerührte Lösung wurden bei pH 13 bis 14 und 21 bis 25°C 198 g (2 Mol) Phosgen eingeleitet. Danach wird 1 ml Ethylpiperidin zugegeben und noch 45 Min. gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,336.

Die Glastemperatur des Polymers wurde zu 212°C bestimmt (DSC).

Beispiel B.3

Wie in Beispiel B.2 wurde eine Mischung aus 114 g (0,5 Mol) Bisphenol A und 155 g (0,5 Mol) Diphenol der Formel (II) zum Polycarbonat umgesetzt.

Das Polycarbonat zeigte eine relative Lösungsviskosität von 1,386.

Die Glastemperatur des Polymer wurde zu 195°C bestimmt (DSC).

Beispiel B.4

Wie in Beispiel B.2 wurde eine Mischung aus 159,6 g (0,7 Mol) Bisphenol A und 93 g (0,3 Mol) Diphenol der Formel (II) zum Polycarbonat umgesetzt.

Das Polycarbonat zeigte eine relative Lösungsviskosität von 1,437.

Die Glastemperatur des Polymers wurde zu 180°C bestimmt (DSC).

Beispiel B.5

31,0 g (0,1 Mol) Diphenol der Formel (II), 24,0 g (0,6 Mol) NaOH und 270 g Wasser werden in einer Inertgas-Atmosphäre unter Rühren gelöst. Dann fügt man eine Lösung von 0,309 g 4-(1,1,3,3-Tetramethylbutyl)-phenol in 250 ml Methylenchlorid zu. In die gut gerührte Lösung wurden bei pH 13 bis 14 und 21 bis 25°C 19,8 g (0,2 Mol) Phosgen eingeleitet. Danach wird 0,1 ml Ethylpiperidin zugegeben und noch 45 Min. gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,314.

Die Glastemperatur des Polymers wurde zu 234°C bestimmt (DSC).

Zur Abschätzung des UV-Beständigkeit der neuen Polycarbonate wurde die Primärradikalbildung bei UV-Bestrahlung mit einer Quecksilberdampflampe (Kantenfilter 305 nm) im Vergleich zu einem Polycarbonat auf

Basis des 2,2-Bis-(4-hydroxyphenyl)-propans bestimmt. Es zeigte sich, daß das Polycarbonat gemäß Beispiel B1 eine geringere Primärradikalbildungsrate und daher eine höhere UV-Beständigkeit aufweist.

Gegenstand der Erfindung der deutschen Patentanmeldung P 38 33 953.6 sind Mischungen enthaltend a) 0,1 Gew.-% bis 99,9 Gew.-%, vorzugsweise 1 Gew.-% bis 98 Gew.-% und insbesondere 2,5 Gew.-% bis 90 Gew.-%,

hochmolekulare, thermoplastische, aromatische Polycarbonate mit $\overline{M}w$ (Gewichtsmittelmolekulargewichten) von mindestens 10 000, vorzusweise von 10 000 bis 300 000 und für Anwendungen im Spritzgußbereich insbesondere von 20 000 bis 80 000, die bifunktionelle Carbonatstruktureinheiten der Formel (Ia)

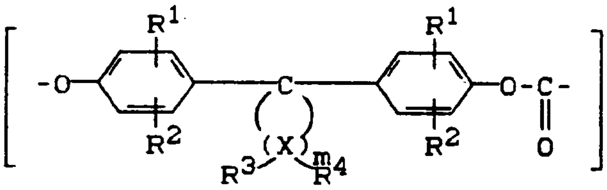

(Ia)

worin

X, $R^1$, $R^2$, $R^3$, $R^4$ und m die für Formel (I) genannte Bedeutung haben,

in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders 100 Mol-% bis 20 Mol-%, neben der zu 100 Mol-% komplementären Menge anderer difunktioneller Carbonatstruktureinheiten enthalten, und

b) 99,9 Gew.-%, bis 0,1 Gew.-%, vorzugsweise 99 Gew.-% bis 2 Gew.-%, und insbesondere 97,5 Gew.-%, bis 10 Gew.-%, an Elastomeren oder an anderen Thermoplasten als den Polycarbonaten der Komponente a),

wobei die Summe aus a) + b) jeweils 100 Gew.-%, ist.

Besonders geeignete Polycarbonate (a) sind solche, in denen in den Struktureinheiten der Formel (Ia) m = 4 oder 5 ist und ganz besonders solche mit Struktureinheiten der Formel (Ic)

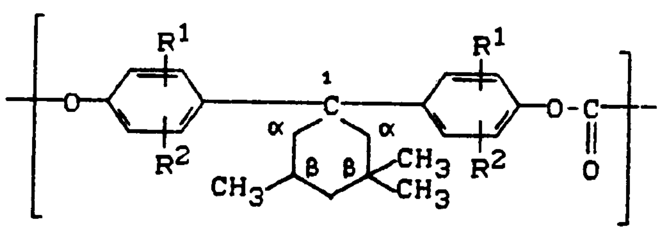

(Ic)

worin

$R^1$ und $R^2$ die für Formel (Ia) genannte Bedeutung haben, besonders bevorzugt aber Wasserstoff sind.

Als Komponente (b) geeignete andere Thermoplasten in den gemäß der DE 38 33 953 erhaltenen Mischungen sind unter anderen

b1) amorphe Thermoplaste, vorzugsweise solche mit einer Glastemperatur von mehr als 40°C, insbesondere von 60°C bis 220°C.

Beispiele für andere amorphe Thermoplasten b1) sind unter anderen amorphe Polymere aus der Klasse der Pfropfpolymerisate von Vinylmonomeren auf Kautschuke, und thermoplastischen Polyurethane.

Geeignete Pfropfpolymerisate entstehen durch Polymerisation der unten genannten Vinylmonomeren oder Vinylmonomerengemischen in Gegenwart von Kautschuken mit Glastemperaturen < 0°C, vorzugsweise <-20°C. Die Pfropfpolymerisate enthalten in der Regel 1 bis 85 Gew.-%, bevorzugt 10 bis 80 Gew.-%, Kautschuk. Die Pfropfpolymerisate lassen sich durch übliche Verfahren in Lösung, Masse oder Emulsion, bevorzugt in Emulsion, herstellen, wobei Vinylmonomerengemische simultan oder sukzessive pfropfpolymerisiert werden können.

Geeignete Vinylmonomere sind Styrol, α-Methylstyrol, Acrylnitril, Methacrylnitril, $C_1$-$C_{12}$-(Cyclo)-Alkyl-Estern der (Meth)Acrylsäure, $C_1$-$C_4$-Carbonsäure-Vinylester. Darüber hinaus können andere, ethylenisch ungesättigte copolymerisierbare Monomere wie beispielsweise, Bromstyrol, Vinylacetat, Acrylsäure- $C_1$-$C_8$-alkylester, (Meth)Acrylsäure, Propylen und N-Vinylpyrrolidon in untergeordneten Mengen einpolymerisiert sein.

Geeignete Kautschuke sind vorzugsweise Dienkautschuke und Acrylatkautschuke.

Dienkautschuke sind beispielsweise Polybutadien, Polyisopren und Copolymerisate von Butadien mit bis zu 35 Gew.-% Comonomeren wie Styrol, Acrylnitril, Methylmethacrylat und $C_1$-$C_6$-Alkylacrylaten.

Acrylatkautschuke sind beispielsweise vernetzte, teilchenförmige Emulsionspolymerisate aus $C_1$-$C_6$-Alkylacrylaten, insbesondere $C_2$-$C_6$-Alkylacrylaten, gegebenenfalls im Gemisch mit bis zu 15 Gew.-% anderen, ungesättigten Monomeren wie Styrol, Methylmethacrylat, Butadien, Vinylmethylether, Acrylnitril, und aus wenigstens einem polyfunktionellem Vernetzer wie beispielsweise Divinylbenzol, Glykol-bis-acrylate, Bisacrylamide, Phosphorsäuretriallylester, Zitronensäuretriallylester, Allylester von Acrylsäure und Methacrylsäure, Triallylisocyanurat, wobei die Acrylatkautschuke bis zu 4 Gew.-% der vernetzenden Comonomere enthalten können.

Zur Herstellung der Pfropfpolymerisate sind auch Gemische von Dien- mit Acrylatkautschuken sowie Kautschuke mit einer Kern-Mantel-Struktur geeignet.

Die Kautschuke müssen zur Pfropfpolymerisation in Form diskreter Teile vorliegen, z. B. als Latex Diese Teilchen haben i.a. mittlere Durchmesser von 10 nm bis 2.000 nm.

Die Pfropfpolymerisate können nach bekannten Verfahren, beispielsweise durch radikalische Emulsionspfropfpolymerisation der Vinylmonomeren in Gegenwart von Kautschuklatices bei Temperaturen von 50 bis 90°C unter Verwendung wasserlöslicher Initiatoren wie Peroxodisulfat oder mit Hilfe von Redoxinitiatoren, erzeugt werden.

Bevorzugt sind radikalisch hergestellte Emulsionspfropfpolymerisate auf teilchenförmige, hochvernetzte Kautschuke (Dien- oder Alkylacrylatkautschuke) mit Gelgehalten >80 Gew.-% und mittleren Teilchendurchmessern (d50) von 80 bis 800 nm.

Besonders geeignet sind technisch gebräuchliche ABS-Polymerisate.

Die gemäß de DE 3833953 als weitere komponenten b1 verwendeten thermoplastischen Polyurethane sind Reaktionsprodukte aus Diisocyanaten, ganz oder überwiegend aliphatischen Oligo-und/oder Polyestern und/oder -ethern sowie einem oder mehreren Kettenverlängerern. Diese thermoplastischen Polyurethane sind im wesentlichen linear und besitzen thermoplastische Verarbeitungscharakteristiken.

Die thermoplastischen Polyurethane sind bekannt oder können nach bekannten Verfahren (siehe beispielsweise US-PS 3 214 411, J.H. Saunders und K.G. Frisch, "Polyurethanes, Chemistry and Technology", Vol II, Seiten 299 bis 451, Interscience Publishers, New York, 1964 und Mobay Chemical Coporation, "A Processing Handbook for Texin Urethane Elastoplastic Materials", Pittsburgh, PA) hergestellt werden.

Ausgangsmaterialien zur Herstellung der Oligoester und Polyester sind beispielsweise Adipinsäure, Bernsteinsäure, Subecinsäure, Sebacinsure, Oxalsäure, Methyladipinsäure, Glutarsäure, Pimelinsäure, Azelainsäure, Phthalsäure, Terephthalsäure und Isophthalsäure.

Adipinsäure ist hierbei bevorzugt.

Als Glykole zur Herstellung der Oligoester und Polyester kommen beispielsweise Ethylenglykol, 1,2- und 1,3-Propylenglykol, 1,2-, 1,3-, 1,4-, 2,3-, 2,4-Butandiol, Hexandiol, Bishydroxymethylcyclohexan, Diethylenglykol und 2,2-Diemthyl-propylenglykol in Betracht. Darüberhinaus können gemeinsam mit den Glykolen kleine Mengen, bis zu 1 Mol-%, tri- oder höher funktionelle Alkohole, z.B. Trimethylolpropan, Glycerin, Hexantriol usw. eingesetzt werden.

Die resultierenden Hydroxyl-oligo-oder -polyester haben ein Molekulargewicht von wenigstens 600, eine Hydroxylzahl von ca. 25 bis 190, vorzugsweise ca. 40 bis 150, eine Säurezahl von ca. 0,5 bis 2 und einen Wassergehalt vo ca. 0,01 bis 0,2 %.

Oligoester bzw. Polyester sind auch oligomere oder polymere Lactone, wie beispielsweise Oligo-caprolacton oder Poly-caprolacton, und aliphatische Polycarbonate, wie beispielsweise Poly-butandiol-(1,4)-carbonat oder Polyhexandiol-(1,6)-carbonat.

Ein besonders geeigneter Oligorest, der als Ausgangsmaterial für die thermoplastischen Polyurethane verwendet werden kann, wird aus Adipinsäure und einem Glykol hergestellt, das wenigstens eine primäre Hydroxylgruppe besitzt. Die Kondensation wird beendet, wenn eine Säurezahl von 10, vorzugsweise ca. 0,5 bis 2 erreicht ist. Das während der Reaktion entstehende Wasser wird damit gleichzeitig oder hinterher abgetrennt, so daß der Wassergehalt am Ende im Bereich von ungefähr 0,01 bis 0,05 %, vorzugsweise 0,01 bis 0,02 liegt.

Oligo- bzw. Polyether zur Herstellung der thermoplastischen Polyurethane sind beispielsweise solche auf Basis von Tetramethylenglykol, Propylenglykol und Ethylenglkyol.

Polyacetale sind ebenfalls als Polyether zu verstehen und einsetzbar.

Die Oligoether bzw. Polyether sollen mittlere Molekulargewichte $\overline{M}n$ (Zahlenmittel, ermittelt über die OH-Zahl der Produkte) von 600 bis 2000 vorzugsweise von 1000 bis 2000 haben.

Als organisches Diisocyanat wird zur Herstellung der Polyurethane vorzugsweise 4,4′-Diphenylmethan-diisocyanat verwendet. Es sollte weniger als 5 % 2,4′-Diphenylmethan-diisocyanat und weniger als 2 % des Dimeren von Diphenylmethan-diisocyanat enthalten. Es ist weiterhin wünschenswert, daß die Acidität, gerechnet als HCl im Bereich von c. 0,005 bis 0,2 % liegt. Die Acidität, gerechnet als % HCl, wird durch Extraktion des Chlorids aus dem Isocyanat in heißer, wäßriger Methanol-Lösung oder durch Freisetzung des Chlorides bei Hydrolyse mit Wasser und Titration des Extraktes mit Standard-Silbernitrat-Lösung bestimmt, um die darin vorhandene Chlorid-Ionen-Konzentration zu erhalten.

Es können auch andere Diisocyanate zur Herstellung der thermoplastischen Polyurethane verwendet werden, beispielsweise die Diisocyante des Ethylens, Ethylidens, Propylens, Butylens, Cyclopentylens-1,3, Cyclohexylens-1,4, Cyclohexylens-1,2, des 2,4-Tolylens, des 2,6-Tolylens, des p-Phenylens, des n-Phenylens, des Xylens, des 1,4-Naphthylens, des 1,5-Naphthylens, des 4,4′-Diphenylens, das 2,2-Diphenylpropan-4,4′-diisocyanat, das Azobenzol-4,4′-diisocyanat, des Diphenylsulfon-4,4′-diisocyanat, das Dichlorhexanmethylen-diisocyanat, das Pentamethylen-diisocyanat, das Hexamethylen-diisocyanat, das 1-Chlorbenzol-2,4-diisocyanat, das Furfuryl-diisocyanat, das Dicyclohexylmethan-diisocyanat, das Isophorondiisocyanat, das Diphenylethan-diisocyanat und Bis(-isocyanatophenyl)-ether von Ethylenglykol, Butandiol etc.

Als Kettenverlängerer können organische difunktionelle verbindungen verwendet werden, die aktiven, mit Isocyanaten reaktiven, Wasserstoff enthalten, z.B. Diole, Hydroxycarbonsäuren, Dicarbonsäuren, Diamine und Alkanolamine und Wasser. Als solche sind beispielsweise Ethylen-, Propylen-, Butylenglykol, 1,4-Butandiol, Butandiol, Butindiol, Xylylenglykol, Amylenglykol, 1,4-Phenylen-bis-β-hydroxy-ethylether, 1,3-Phenylen-bis-β-hydroxyethylether, Bis-(hydroxymethyl-cyclohexan), Hexandiol, Adipinsäure, ω-Hydroxycapronsäure, Thiodiglykol, Ethylendiamin-, Propylen, Butylen-, Hexamethylen-, Cyclohexylen-, Phenylen-, Toluylen-, Xylylendiamin, Diaminodicyclohexylmethan, Isophorondiamin, 3,3′-Dichlorbenzidin, 3,3′-Dinitrobenzidin, Ethanolamin, Aminopropylalkohol, 2,2-Diemthyl-propanolamin, 3-Aminocyclhoexylalkohol und p-Amiobenzylalkohol zu nennen. Das Molverhältnis Oligo- bzw. Polyester zu bifunktionellen Kettenverlängerer bewegt sich im Bereich 1:1 bis 1:50, vorzugsweise 1:2 bis 1:30.

Außer difunktionellen Kettenverlängerern können auch in untergeordneten Mengen bis zu etwa 5 Mol-%, bezogen auf Mole eingesetzten bifunktionellen Kettenverlängerer, trifunktionelle oder mehr als trifunktionelle Kettenverlängerer eingesetzt werden.

Derartige trifunktionelle oder mehr als trifunktionelle Kettenverlängerer sind beispielsweise Glycerin, Trimethylolpropan, Hexantriol, Pentaerythrit und Triethanolamin.

Monofunktionelle Komponenten, beispielsweise Butanol, können auch zur Herstellung der thermoplastischen Polyurethane eingesetzt werden.

Die als Bausteine für die thermoplastischen Polyurethane genannten Diisocyanate, Oligoester, Polyester Polyether. Kettenverlängerer und monofunktionellen Komponenten sind entweder literaturbekannt oder nach literaturbekannten Verfahren erhältlich.

Die bekannte Herstellung der Polyurethane kann beispielsweise, wie folgt, durchgeführt werden:

So können beispielsweise die Oligo- bzw. Polyester, die organischen Diisocyanate und die Kettenverlängerer für sich vorzugsweise auf eine Temperatur von ca. 50 bis 220°C erhitzt und dann vermischt werden. Vorzugsweise werden die Oligo- bzw. Polyester zunächst einzeln erhitzt, dann mit den Kettenverlängerern gemischt und die erhaltene Mischung mit dem vorerhitzten Isocyanat vermischt.

Das Mischen der Ausgangskomponenten zur Herstellung der Polyurethane kann mit irgendeinem mechanischen Rührer erfolgen, der intensive Mischung innerhalb kurzer Zeit erlaubt. Falls die Viskosität der Mischung während des Rührens vorzeitig zu schnell steigen sollte, kann entweder die Temperatur gesenkt oder eine kleine Menge (0,001 bis 0,05 Gew.-%, bezogen auf Ester) Zitronensäure oder ähnliches zugegeben werden, um die Geschwindigkeit der Reaktion zu verkleinern. Zur Erhöhung der Reaktionsgeschwindigkeit können geeignete Katalysatoren, wie z.B. tertiäre Amine, die in dem US-Patent 2 729 618 genannt werden, zur Anwendung kommen.

Die in der DE 38 33 953 beschriebenen Mischungen können beispielsweise durch Mischen von Lösungen der Komponenten a) und b) oder durch Mischen der Komponenten auf Knetern, Walzen oder Ein- bzw. Mehrwellenextrudern hergestellt werden.

Diesen Mischungen können noch die für die Komponenten b) üblichen Additive als Komponente c) z. B. Füllstoffe und/oder Nukleierungsmittel und/oder Fasern in den üblichen Mengen zugegeben werden.

Anorganische Füllstoffe sind beispielsweise Keramikfüllstoffe wie Aluminiumnitrit, Silicate, Titandioxid, Talkum, Kreide, Glimmer, Ruß, Fasern, Graphit sind beispielsweise solche aus Glas, aus Kohlenstoff oder aus flüssig-kristallinen Polymeren.

Nukleierungsmittel können beispielsweise sein Bariumsulfat, $TiO_2$.

Diese Additive können in den üblichen Mengen entweder vor der Herstellung der erfindungsgemäßen Mischungen den Komponenten b) oder zusammen mit den Polycarbonaten der Komponente a) den Komponenten b) zugemischt werden oder nachträglich den erfindungsgemäßen Mischungen aus den Komponenten a) und b) eingearbeitet werden.

Ebenso können den Polycarbonaten der Komponente a) - vor oder während oder nach der Abmischung

mit den Komponenten b) - die genannten Additive in den üblichen Mengen zugesetzt werden.

Es hat sich nun gezeigt, daß ternäre Mischungen aus den Polycarbonaten der Komponente a) der deutschen Patentanmeldung P 38 33 953.6 , den thermoplastischen Polyurethanen der Komponente b1) der deutschen Patentanmeldung P 38 33 953.6 und den Pfropfpolymerisaten von Vinylmonomeren auf Kautschuke der Komponente b1) der deutschen Patentanmeldung P 38 33 953.6 eine ideale Eigenschaftskombination haben, nämlich gute Zähigkeit auch bei tiefen Temperaturen, gute Wärmeformbeständigkeit, gute Beständigkeit gegen Treibstoffe sowie eine in weiten Bereichen variierbare Steifigkeit. Derartige Mischungen sind daher für den Einsatz im Kraftfahrzeugbau sehr gut geeignet.

Gegenstand der vorliegenden Erfindung sind somit ternäre, thermoplastische Mischungen, enthaltend

A) 5 Gew.-% bis 98,5 Gew.-%, vorzugsweise 10 Gew.-% bis 93,5 Gew.-% und insbesondere 25 Gew.-% bis 84 Gew.-% Polycarbonate der Komponente a) der deutschen Patentanmeldung P 38 33 953.6,

B) 94,5 Gew.-% bis 1 Gew.-%, vorzugsweise 88,5 Gew.-% bis 5 Gew.-% und insbesondere 69 Gew.-% bis 10 Gew.-% thermoplastische Polyurethane der Komponente b1) der deutschen Patentanmeldung P 38 33 953.6, und

C) 0,5 Gew.-% bis 50 Gew.-%, vorzugsweise 1,5 Gew.-% bis 45 Gew.-%, und insbesondere 6 Gew.-% bis 40 Gew.-% Pfropfpolymerisate von Vinylmonomeren auf Kautschuke der Komponente b1) der deutschen Patentanmeldung P 38 33 953.6,

wobei die Summe der Gewichtsprozente aus A)+B)+C) jeweils 100 Gew.-% ist.

Die bevorzugten Polycarbonate der Komponente A} in den ternären Mischungen entsprechen den bevorzugten Polycarbonaten der Komponente a) der deutschen Patentanmeldung P 38 33 953.6, in denen in den Struktureinheiten der Formel (Ia) m = 4 oder 5 ist und ganz besonders solche mit Struktureinheiten der Formel (Ic) der deutschen Patentanmeldung P 38 33 953.6, worin $R^1$ und $R^2$ die für Formel (Ia) genannte Bedeutung haben, besonders bevorzugt aber Wasserstoff sind.

Die Herstellung der erfindungsgemäßen ternären Mischungen aus den Komponenten A)+B)+C) erfolgt, wie dies in der eingangs aufgeführten deutschen Patentanmeldung P 38 33 953.6 für die binären Mischungen aus den Polycarbonaten der Komponente a) der deutschen Patentanmeldung P 38 33 953.6 mit den thermoplastischen Polyurethanen der Komponente b1) der deutschen Patentanmeldung P 38 33 953.6 oder mit den Pfropfpolymerisaten von Vinylmonomeren auf Kautschuke der Komponente b1) der deutschen Patentanmeldung P 38 33 953.6 beschrieben ist.

Die Herstellung der erfindungsgemäßen ternären Mischungen aus den Komponenten A)+B)+C) kann simultan oder auch sukzessive über die Zwischenstufen A)+B) oder A)+C) oder B)+C) erfolgen.

Gegenstand der vorliegenden Erfindung ist somit auch ein Verfahren zur Herstellung der erfindungsgemäßen Mischungen aus den Komponenten A)+B)+C), das dadurch gekennzeichnet ist, daß man die Komponenten A), B) und C) in den erfindungsgemäßen Mengenverhältnissen simultan oder sukzessive entweder

1. als Lösungen, in den für die Komponenten A), B) und C) üblichen Lösungsmitteln gelöst, mischt und dieses Gemisch in üblicher Weise aufarbeitet, oder

2. in der Schmelze mischt, homogenisiert und in üblicher Weise, beispielsweise zu Granulat, aufarbeitet.

Die erfindungsgemäßen Mischungen aus den Komponenten B), C) und A) können noch die für die jeweiligen Komponenten üblichen Additive in den üblichen Mengen enthalten, wie sie bereits für die Komponenten B), C) und A) in der deutschen Patentanmeldung P 38 33 953.6 erwähnt sind. Entsprechendes gilt für den Zeitpunkt und die Art der Einarbeitung der Additive, die in der deutschen Patentanmeldung P 38 33 953.6 ebenfalls bereits beschrieben ist.

Die erfindungsgemäßen Mischungen aus den Komponenten A)+B)+C) können zu beliebigen Formkörpern, Granulat, Halbzeug etc. auf üblichen Maschinen wie Extrudern oder Spritzgußmaschinen in bekannter Weise verarbeitet werden.

Geeignete Formkörper für die Mischungen aus A)+B)+C) sind beispielsweise Stoßstangen für Kraftfahrzeuge.

Beispiel Eingesetzte Polycarbonate

Beispiel A

3104 g (10 Mol) des Diphenols (II), 1600 g (40 Mol) NaOH werden in einer Inertgas-Atmosphäre in 30 l Wasser unter Rühren gelöst. Dann fügt man eine Lösung von 28,2 g (3 Mol-%) Phenol in 30 l Methylchlorid zu. In die gut gerührte Lösung werden bei pH 13 bis 14 und 21 bis 25°C 1500 g (ca. 15 Mol) Phosgen eingeleitet. Danach werden 10 ml N-Ethylpiperidin zugegeben und noch 45 Min. gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigt eine relative Lösungsviskosität von 1,258 gemessen

an einer Lösung von 0,5 g Polycarbonat in 100 ml $CH_2Cl_2$-Lösung bei 23°C.

Beispiel B

684 g (3 Mol) 2,2-Bis-(4-hydroxyphenyl)-propan (Bisphenol A), 2170 g (7 Mol) Diphenol (II), 1600 g (40 Mol) NaOH werden in einer Inertgas-Atmosphäre unter Rühren in 30 l Wasser gelöst. Dann fügt man eine Lösung von 23,5 g (2,5 μol-%) Phenol in 30 l Methylenchlorid zu. In die gut gerührte Lösung wurden bei pH 13 bis 14 und 21 bis 25°C 1500 g (ca 15 Mol-%) Phosgen eingeleitet. Danach werden 10 ml N-Ethylpiperidin zugegeben und noch 45 Min. gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigt eine relative Lösungsviskosität ($\eta_{rel}$) von 1,283.

Beispiel C

Analog Beispiel B wurde eine Mischung aus 1140 g (5 Mol) Bisphenol A und 1550 g (5 Mol) Diphenol (II) zum Polycarbonat umgesetzt. Es besaß $\eta_{rel}$ von 1,291.

Beispiel D

Analog Beispiel B wurde eine Mischung aus 1596 g (7 Mol) Bisphenol A und 930 g (3 Mol) Diphenol (II) zu Polycarbonat verarbeitet. Es zeigte $\eta_{rel}$ von 1,287.

Kennzeichnung der verwendeten thermoplastischen Polyurethane (TPU)

TPU 1

Es besaß einen Schmelzbereich von ca. 200 - 220°C und ein Zahlenmittel-Molgewicht ($\overline{M}_n$) von 85.700. Es war aus einem Oligoester aus Butylenglykol-1,4 und Adipinsäure ($\overline{M}_n$ 2000), 4,4-Diphenylmethan-diisocyanat und Butandiol-1,4 als Kettenverlängerer aufgebaut. Das Verhältnis von NCO- zu OH-Gruppen betrug 1,03.

TPU 2

Es besaß einen Schmelzbereich von 190 - 210°C, einen Zahlenmittel-Molekulargewicht ($\overline{M}_n$) von 79.300. Es war aus Oligobutylenglykol ($\overline{M}_n$ 1000, OH-Zahl 112), 4,4-Diphenylmethan-diisocyanat sowie Butandiol-1,4 als Kettenverlängerer hergestellt. Das Verhältnis von NCO-zu OH-Gruppen lag bei 1,03.

Herstellung der verwendeten Pfropfpolymeren

a) Mit Polybutadien als Pfropfgrundlage

In einem druckfesten Rührgefäß wird eine Lösung aus 80 Gew.-Tl. salzfreiem Wasser, 1,5 Gew.-Tl. Natriumsalz der disproportionierten Abietinsäure und 0,3 Gew.-Tl. Kaliumperoxydisulfat vorgelegt. Nach Verdrängen der Luft durch Stickstoff und Einstellung der Innentemperatur auf 55°C werden 0,35 Gew.-Tl. Dodecylmercaptan und x Gew.-Tl. Butadien zugesetzt und polymerisiert. Mit absinkender Reaktionsgeschwindigkeit bei fortschreitender Polymerisation wird die Temperatur langsam auf 68°C angehoben (x entspricht den Werten von Tabelle 1).

Nach beendeter Polymerisation werden geringe Mengen des nicht umgesetzten Butadiens durch Ausrühren des erhaltenen Latex unter vermindertem Druck entfernt. 175 Gew.-Tl. entsalztes Wasser und 0,3 Gew.-Tl. Kaliumperoxidsulfat werden zugesetzt.

Nach Verdrängen der Luft durch Stickstoff und Erwärmen auf 65°C werden 2 Gew.-Tl. Emulgator (Na-Salz der disproportionierten Abietinsäure oder Alkylsulfonat), gelöst in 25 Gew.-Tl. Wasser, sowie y Gew.-Tl. der in Tabelle 1 angegebenen Monomeren zugesetzt.

Die Zulaufdauer beträgt ca. 4 Std. Zur Vervollständigkeit der Reaktion wird nach beendetem Zulauf noch 2 Std. bei 65°C weitergerührt.

Der so erhaltene Pfropfpolymerlatex wird nach Zusatz von 1 Gew.-Tl. eines phenolischen Antioxidans (2,6-Di-tert.-butyl-p-kresol) mit 2 %iger $MgSO_4$/Essigsäure-Lösung (Mischungsverhältnis 1 : 1 Gew.-Tl.) koaguliert, das Koagulat abgetrennt, salzfrei gewaschen und bei 70°C im Vakuum getrocknet.

Die Zusammensetzung der Pfropfpolymeren ist in der Tabelle 1 zu entnehmen.

b) Mit Polyacrylat-Kautschuk als Pfropfgrundlage (gemäß EP 134 937).

In einem Reaktor werden vorgelegt:
1030 Gew.-Tl. Wasser und
5 Gew.-Tl. Natriumsalz von $C_{14}$-$C_{16}$-Alkylsulfonsäuren.

Bei 70°C werden 80 Gew.-Tl. der Lösung 1 (s.u.) eingespeist. Anschließend initiiert man durch Zugabe von 5 Gew.-Tl. Kaliumperoxydisulfat in 100 Gew.-Tl. Wasser. Danach werden folgende Lösungen dosiert:

Lösung 1: 995 Gew.-Tl. n-Butylacrylat und
5 Gew.-Tl. Triallylcyanurat (80 Gew.-Tl dieser Lösung wurden bereits in die Vorlage gegeben; der Rest der Lösung wird nach Initiierung dosiert!).

Lösung 2: 20 Gew.-Tl. Natriumsalze von $C_{14}$-$C_{18}$-Alkylsulfonsäuren und
700 Gew.-Tl. Wasser.

Nach Zudosierungen der Lösungen 1 und 2 in 5 Std. bei 70°C wird 4 Std. bei 70°C nachpolymerisiert. Es entsteht ein Latex I mit einem Feststoffgehalt von 35 Gew.-%. Die weitere Verarbeitung erfolgt folgendermaßen.

Vorlage 1: 12,4 Gew.-Tl. Latex I und
313 Gew.-Tl. Wasser

Vorlage 2: 0,82 Gew.-Tl. Kaliumperoxydisulfat und
20 Gew.-Tl. Wasser

Zulauf 1: 629 Gew.-Tl. n-Butylacrylat und
1 Gew.-Tl. Triallylcyanurat

Zulauf 2: 700 Gew.-Tl. Natriumsalze von $C_{14}$-$C_{16}$-Alkylsulfonsäuren

Bei 65 - 68°C wird Vorlage 1 aufgeheizt; dann speist man 24 Gew.-Tl. von Zulauf 1 ein. Nach Initiierung mit Vorlage 2 wird der Rest von Zulauf 1 und Zulauf 2 innerhalb von 5 Std. zudosiert. Anschließend rührt man 4 Std. nach.

Der erhaltene Latex II besitzt einen Feststoffgehalt von 37 Gew.-%. Die Latex-Teilchengröße beträgt 0,5 µm. Das Polymerisat besitzt einen Gelgehalt von 93 Gew.-%, gemessen in DMF bei 23°C.

Bei der Pfropfung von Methylmethacrylat auf den erhaltenen Kautschuk wird folgendermaßen verfahren:

| | | | |
|---|---|---|---|
| Vorlage 1: | Latex II | 3286,4 | Gew.-Tl. |
| | Kaliumperoxydisulfat | 2 | Gew.-Tl. |
| | Wasser | 120 | Gew.-Tl. |
| Zulauf 1: | Methylmethacrylat | 304 | Gew.-Tl. |
| Zulauf 2: | Natriumsalze von $C_{14}$-$C_{16}$-Alkylsulfonsäuren | 6 | Gew.-Tl. |
| | Wasser | 396 | Gew.-Tl. |

Bei 65°C wird in die Vorlage 1 Zulauf 1 und Zulauf 2 innerhalb von 4 Std. bei 65°C zudosiert. Anschließend läßt man 4 Std. bei 65°C auspolymerisieren (Latex III).

Die Pfropfpolymer-Latices werden wie folgt weiterbehandelt:

| | | | |
|---|---|---|---|
| Vorlage 2: | Wasser | 5525 | Gew.-Tl. |
| | $MgSO_4$ x $H_2O$ (Bittersalz) | 107 | Gew.-Tl. |
| Zulauf 3: | Latex III | 379,5 | Gew.-Tl. |
| Zulauf 4: | Methylmethacrylat | 156 | Gew.-Tl. |
| Aktivator: | Kaliumperoxydisulfat | 1,3 | Gew.-Tl. |
| | Wasser | 78 | Gew.-Tl. |

Unter gutem Rühren wird Vorlage 2 auf 70 - 73°C aufgeheizt. Innerhalb von 1 Std. dosiert man den Zulauf 3 hinzu. Dann fügt man den Zulauf 4 innerhalb von 30 min hinzu und aktiviert anschließend mittels der Aktivatorlösung. Man heizt auf 80°C auf, rührt 2 Std., heizt auf 90°C auf und rührt nochmals 2 Std. Nach anschließender Stabilisierung mit 2 Gew.-Tl. phenolischen Antioxidantien wird über Filtration, Waschung und Trocknung zu einem Pulver aufgearbeitet (Pfropfpolymer F).

Die Zusammensetzung von Pfropfpolymer F ist ebenfalls aus Tabelle 1 ersichtlich:

Tabelle 1: Zusammensetzung der Pfropfpolymerisate

| Typ | Gew.-% Pfropfgrundlage | X | Gew.-% Y Pfropfmonomeres | mittlerer Teilchendurchmesser (µm) |
|---|---|---|---|---|
| A | Polybutadien, | 80 | 20 MMA / n-BA (9/1) | 0,4 |
| B | " | 80 | 20 S/AN (72/28) | 0,4 |
| C | " | 80 | 20 MMA | 0,4 |
| D | " | 70 | 30 MMA | 0,4 |
| E | " | 80 | 20 MA | 0,4 |
| F | Acrylat-Kautschuk, | 70 | 30 MMA | 0,5 |

n-BA = n-Butylacrylat
MMA = Methylmethacrylat
MA = Methylacrylat
AN = Acrylnitril
S = Styrol

Die Zusammensetzungen der hergestellten Mischungen sowie ihre Eigenschaften gehen aus Tabelle 2 hervor. Die Mischungen wurden in einem Doppelschneckenextruder Typ ZSK 32 der Firma Werner & Pfleiderer compoundiert. Die in der Masse erreichten maximalen Temperaturen sind in Tabelle 2 aufgenommen worden.

Als Maß für die Wärmeformbeständigkeit der Polymerenmischungen wurde die Vicat-Erweichungstemperatur VST/B gemäß DIN 53 460/ISO 306 bestimmt.

Zur Beurteilung der Treibstofffestigkeit wurden Prüfstäbe (nach Spritzgießverfahren hergestellt) der Abmessungen 80 x 10 x 4 mm dem Schablonentest (W. Kaufmann, Bestimmung der Chemikalienbeständigkeit von Kunststoffen unter mechanischer Spannung, Kunststoffe 65 (1975) S. 155 - 157) unterworfen. Dabei wurden Randfaserdehnungen von 1 % eingestellt. Als Prüfflüssigkeit diente gemäß DIN 51 604, Teil 1, eine Mischung aus:

50 Vol.-% Toluol
30 " Iso-Oktan
15 " Diisobutylen
5 " Ethanol.

Die Prüfung wurde wie folgt durchgeführt:

1. Zyklus

Auf die Biegeschablonen mit aufgebrachter Probe einem mit der Prüfflüssigkeit getränkten Wattebausch gelegt und 15 min einwirken lassen. Probe dann 15 min ablüften lassen.

2. Zyklus

Entspricht dem 1. Zyklus.

Auswertung

Nach Beendigung des 2. Zyklus wird die von der Schabone genommene Probe mit bloßem Auge betrachtet

und wie folgt bewertet:

| Stufe | Merkmal |
|---|---|
| 1 | keine sichtbare Veränderung |
| 2 | Oberfläche vermattet |
| 3 | feine Risse |
| 4 | starke Risse, Bruch |

Die Bestimmung der Kerbschlagzähigkeit nach Izod erfolgte gemäß ISO 180/4 A an gespritzten Prüfkörpern der Abmessungen 63,5 x 12,7 x 3,2 mm mit Kerbradius 0,25 mm.

Der Zug-E-Modul wurde gemäß DIN 53 457 an Schulterstäben Nr. 34 gemessen.

Für Vergleichsversuche wurde ein Polycarbonat (PC) auf Basis (2,2-Bis(4-hydroxyphenyl)-propan) der relativen Lösungsviskosität ($\eta_{rel}$) 1,296, gemessen mit einer Konzentration von 0,5 g in 100 ml $CH_2Cl_2$-Lösung bei 25°C, verwendet.

Tabelle 2

| Beispiel | Poly (carbonat) Typ | Gew-% | T P U 1 | 2 | Gew-% | Pfropf-polym. Typ | Gew-% | Compoundiertemperatur °C | Vicat VST/B °C | Treibstofffestigkeit Stufe | Kerbschlagzähigkeit nach Izod [J/m] 23° C | -40° C | Zug-E-Modul 23° C MPa |
|---|---|---|---|---|---|---|---|---|---|---|---|---|---|
| 1* | BPA-PC | 100 | - | - | - | - | - | - | 149 | 4 | 840 | 82 | 2300 |
| 2* | BPA-PC | 75 | + | - | 25 | - | - | 250 | 137 | 2 - 3 | 810 | 75 | 1923 |
| 3* | BPA-PC | 65 | + | - | 25 | V | 10 | 250 | 112 | 2 | 605 | 340 | 1280 |
| 4 | A | 65 | + | - | 25 | V | 10 | 280 | 187 | 2 - 3 | 385 | 82 | 1387 |
| 5 | B | 65 | + | - | 25 | V | 10 | 280 | 165 | 2 | 423 | 121 | 1368 |
| 6 | C | 65 | + | - | 25 | V | 10 | 270 | 151 | 2 | 481 | 147 | 1372 |
| 7 | D | 65 | + | - | 25 | V | 10 | 260 | 131 | 2 | 532 | 173 | 1375 |

*) Diese Versuche dienen dem Vergleich.

Tabelle 2

| Beispiel | Poly (carbonat) | | T P U | | | Pfropf-polym. | | Compoun-diertem-peratur | Vicat VST/B | Treib-stoff-festig-keit. Stufe | Kerbschlag-zähigkeit nach Izod [J/m] | | Zug-E-Modul 23° C |
|---|---|---|---|---|---|---|---|---|---|---|---|---|---|
| | Typ | Gew-% | 1 | 2 | Gew-% | Typ | Gew-% | °C | °C | | 23° C | -40° C | MPa |
| 8 | C | 65 | + | - | 25 | I | 10 | 270 | 149 | 2 | 527 | 219 | 1284 |
| 9 | C | 65 | + | - | 25 | II | 10 | 270 | 147 | 2 | 596 | 261 | 1412 |
| 10 | C | 65 | + | - | 25 | III | 10 | 270 | 152 | 2 | 511 | 123 | 1321 |
| 11 | C | 65 | + | - | 25 | IV | 10 | 270 | 161 | 2 | 455 | 92 | 1436 |
| 12 | C | 65 | + | - | 25 | VI | 10 | 270 | 158 | 2 | 467 | 109 | 1417 |
| 13 | C | 65 | - | + | 25 | VI | 10 | 270 | 156 | 2 | 443 | 161 | 1392 |
| 14 | C | 65 | - | + | 25 | V | 10 | 270 | 150 | 2 | 472 | 173 | 1361 |
| 15 | C | 55 | + | - | 25 | V | 20 | 260 | 127 | 1 - 2 | 597 | 253 | 1168 |
| 16 | C | 40 | + | - | 55 | II | 5 | 260 | 113 | 1 - 2 | 532 | 124 | 1032 |
| 17 | C | 30 | + | - | 69 | II | 1 | 250 | 83 | 1 - 2 | 756 | 81 | 753 |
| 18 | C | 55 | + | - | 10 | II | 35 | 260 | 125 | 1 | 484 | 317 | 1256 |

## Patentansprüche

1. Ternäre, thermoplastische Mischungen, enthaltend
   A) 5 - 98,5 Gew.-% thermoplastische Polycarbonate auf Basis von Diphenolen der Formel (I)

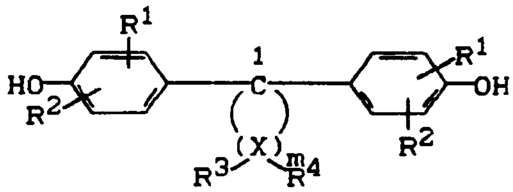

(I),

worin

$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,

m eine ganze Zahl von 4 bis 7,

$R^3$ und $R^4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X, beide Substituenten $R^3$ und $R^4$ Alkylgruppen sind,

B) 94,5 Gew.-% bis 1 Gew.-% thermoplastische, lineare Polyurethane, hergestellt aus Diisocyanaten, ganz oder überwiegend aliphatischen Oligo- und/oder Polyestern und/oder -ethern sowie einem oder mehreren Kettenverlängerern und

C) 0,5 Gew.-% bis 50 Gew.-% Pfropfpolymerisate von Vinylmonomeren auf Kautschuke, wobei die Summe der Gewichtsprozente von A + B + C jeweils 100 Gew.-% ist.

2. Verfahren zur Herstellung der ternären thermoplastischen Mischungen des Anspruchs 1, dadurch gekennzeichnet, daß man die Komponenten A, B und C in den in Anspruch 1 angegebenen Mengenverhältnissen simultan oder sukzessive als Lösungen in den für die Komponenten A, B und C üblichen Lösungsmitteln gelöst, mischt und dieses Gemisch in üblicher Weise aufarbeitet.

3. Verfahren zur Herstellung der ternären thermoplastischen Mischungen des Anspruchs 1, dadurch gekennzeichnet, daß man die Komponenten A, B und C in den in Anspruch 1 angegebenen Mengenverhältnissen simultan oder sukzessive in der Schmelze mischt, homogenisiert und in üblicher Weise aufarbeitet.

## Claims

1. Ternary thermoplastic mixtures containing
   A) 5 to 98.5% by weight thermoplastic polycarbonates based on diphenols corresponding to formula (I)

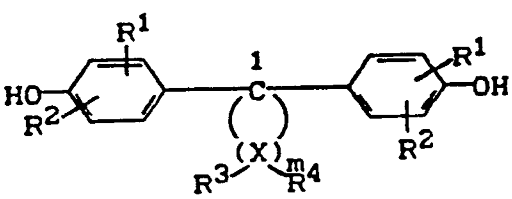

(I),

in which

$R^1$ and $R^2$ independently of one another represent hydrogen, halogen, $C_1$-$C_8$ alkyl, $C_5$-$C_6$ cycloalkyl, $C_1$-$C_{10}$ aryl and $C_1$-$C_{12}$ aralkyl,

m is an integer of from 4 to 7,

$R^3$ and $R^4$ may be individually selected for each X and independently of one another represent

hydrogen or $C_1$-$C_6$ alkyl and
X represents carbon,
with the proviso that, at at least one atom X, both substituents $R^3$ and $R^4$ are alkyl,
B) 94.5% by weight to 1% by weight thermoplastic linear polyurethane prepared from diisocyanates, completely or predominantly aliphatic oligo- and/or polyesters and/or ethers and one or more chain-extending agents and
C) 0.5% by weight to 50% by weight graft polymers of vinyl monomers on rubbers, the sum of the percentages by weight of A)+B)+C) being 100% by weight.

2. A process for the production of the ternary thermoplastic mixtures claimed in claim 1, characterized in that components A, B and C are simultaneously or successively mixed as solutions in the typical solvents for components A, B and C in the quantitative ratios shown in Claim 1 and the resulting mixture is worked up in known manner.

3. A process for the production of the ternary thermoplastic mixtures claimed in claim 1, characterized in that components A, B and C are mixed simultaneously or successively in the melt in the quantitative ratios shown in Claim 1, homogenized and worked up in the usual way.

## Revendications

1. Mélanges thermoplastiques ternaires, contenant :
A) 5 à 98,5 % en poids de polycarbonates thermoplastiques à base de diphénols de formule (I) :

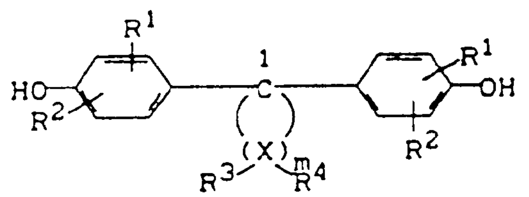

(I),

dans laquelle
$R^1$ et $R^2$ représentent chacun, indépendamment l'un de l'autre, un atome d'hydrogène ou d'halogène, un groupe alkyle en $C_1$-$C_8$, cycloalkyle en $C_5$-$C_6$, aryle en $C_6$-$C_{10}$ ou aralkyle en $C_7$-$C_{12}$,
m est un nombre entier valant 4 à 7,
$R^3$ et $R^4$ peuvent être choisis, pour chaque X individuel, indépendamment l'un de l'autre parmi un atome d'hydrogène et un groupe alkyle en $C_1$-$C_6$, et
X représente du carbone,
à la condition que sur au moins un atome X, les deux substituants, $R^3$ et $R^4$, représentent chacun un groupe alkyle ;
B) 94,5 % à 1 % en poids de polyuréthanne linéaire thermoplastique, préparé à partir de diisocyanates, d'oligo- et/ou de polyesters totalement aliphatiques ou de façon prédominante aliphatiques et/ou d'oligo-éthers et/ou de polyéthers entièrement aliphatiques ou de façon prédominante aliphatiques, ainsi qu'à partir d'un ou plusieurs agents d'allongement des chaînes, et
C) 0,5 % en poids à 50 % en poids de polymères de greffage de monomères vinyliques sur des caoutchoucs, la somme des pourcentages pondéraux de (A + B + C) formant à chaque fois 100 % en poids.

2. Procédé pour préparer des mélanges thermoplastiques ternaires selon la revendication 1, caractérisé en ce qu'on mélange les composants A, B et C, en les proportions pondérales indiquées à la revendication 1, en opérant simultanément ou successivement, Le A 26902 (90114016.0) sous forme de solutions dans les solvants usuels pour les composants A, B et C, et l'on traite ce mélange de façon habituelle pour le purifier et le terminer.

3. Procédé pour préparer des mélanges thermoplastiques ternaires selon la revendication 1, caractérisé en ce qu'on mélange simultanément ou successivement les composants A, B et C, en les proportions pondérales indiquées à la revendication 1, en opérant sur la masse fondue, on homogénéise et l'on traite de façon usuelle pour purifier et terminer le mélange.